# FASCICULE DE BREVET EUROPEEN

(11) **EP 0 479 646 B1**
(45) Date de publication et mention de la délivrance du brevet: **12.01.1994**
(21) Numéro de dépôt: 91402554.9
(22) Date de dépôt: 25.09.1991
(51) Int. Cl.: C10G 3/00, B01J 8/08, B01J 8/18

(54) **Procédé de conversion catalytique en lit fluide, à courant descendant, d'une charge consistant essentiellement en au moins un composé oxygéné**
Katalytisches abwärtsfliessendes fluidisiertes Bettumwandlungsverfahren eines Einsatzes, der hauptsächlich aus mindestens einer Sauerstoffverbindung besteht.
Catalytic downflow fluid bed conversion process of a charge consisted essentially of at least one oxygen containing compound

(30) Priorité: 03.10.1990 FR 9012276
(43) Date de publication de la demande: 08.04.1992
(73) Titulaire: INSTITUT FRANCAIS DU PETROLE, 92502 Rueil-Malmaison (FR)
(72) Inventeur: Burzynski, Jean-Pierre, F-69110 Sainte Foy les Lyon (FR); Galtier, Pierre, F-38209 Vienne CEDEX (FR); Hoffmann, Frédéric, F-75010 Paris (FR); Hugues, François, Charly, F-69390 Vernaison (FR); Pontier, Renaud, F-38200 Vienne (FR)

(56) Documents cités:
- EP-A- 0 096 996
- FR-A- 2 655 053
- US-A- 4 385 985
- US-A- 4 532 026

## Description

L'invention se rapporte à un procédé de conversion d'une charge consistant essentiellement en au moins un composé oxygéné, et plus spécialement, au moins un alcool tel que le méthanol et/ou au moins un éther-oxyde tel que le diméthyléther, ainsi qu'à l'appareillage permettant la mise en oeuvre de ce procédé.

Ce procédé s'applique à la production d'hydrocarbures oléfiniques, notamment à usage pétrochimique, comprenant une majeure partie de composés ayant de 2 à 4 atomes de carbone dans leur molécule, en présence d'un catalyseur comme une zéolithe circulant dans un réacteur à lit fluidisé.

Les procédés de conversion en lit fluide du méthanol, par exemple en hydrocarbures insaturés, mettent en jeu des réactions exothermiques en présence d'un catalyseur zéolithique, et les principales difficultés proviennent du fait que les composés hydrocarbonés au niveau de température requis par la réaction catalytique conduisent à une formation de coke qui désactive rapidement le catalyseur.

L'art antérieur est illustré par les brevets US-A-4385 985 et US-A-4532 026.

Il est connu, par les documents de brevet US-A-4447669 et EP-A-96996, des dispositifs utilisant un élévateur comme zone réactionnelle où circule le catalyseur. Les conditions de fonctionnement sont telles que la présence d'un élévateur entraîne quelques inconvénients. En particulier il y a une forte variation de la densité du catalyseur le long du réacteur, et principalement au début de la zone de réaction, ce qui conduit à des temps de contact importants qui favorisent la formation d'un large éventail de produits au détriment de la sélectivité en oléfines légères.

La difficulté essentielle de mise en oeuvre de ce procédé est d'obtenir sélectivement des oléfines légères, c'est-à-dire ayant de 2 à 4 atomes de carbone dans leur molécule, la tendance de la réaction étant de conduire à une large gamme d'hydrocarbures saturés et insaturés allant généralement du méthane à des hydrocarbures ayant jusqu'à 10 atomes de carbone dans leur molécule ou plus, tels que ceux constituant habituellement la coupe essence.

Pour orienter la réaction vers les oléfines légères, il est souhaitable d'associer des conditions opératoires bien choisies et un temps de contact, entre la charge et le catalyseur, régulier et relativement court, de manière à obtenir une bonne sélectivité en ces composés.

Parmi ces facteurs, l'un des plus importants consiste à assurer, au niveau du contact de la charge (qui est généralement préchauffée et additionnée éventuellement de vapeur d'eau) et du catalyseur chaud régénéré utilisé dans l'unité de conversion, un mélange tel que le transfert de chaleur entre la charge et le catalyseur soit effectué le plus rapidement possible et de façon la plus régulière possible ; il est également primordial que le renouvellement du catalyseur régénéré au niveau de l'introduction de la charge dans la zone réactionnelle soit réalisé de façon permanente et efficace, en évitant en particulier les phénomènes de rétro-mélange qui accroissent les temps de contact et provoquent une diminution importante de la formation d'oléfines légères.

Un autre phénomène important, également préjudiciable à la bonne marche d'une unité de conversion de composés oxygénés en lit fluidisé, consiste en la difficulté d'obtenir une bonne homogénéité radiale du catalyseur, tant au début de la zone réactionnelle que tout au long de cette zone.

Quant à la sélectivité des réactions de conversion des composés oxygénés, et en particulier du méthanol, en hydrocarbures, il est connu, d'une façon générale, qu'elle est d'autant meilleure que l'écoulement des fluides se rapproche d'un écoulement de type piston, qu'il est particulièrement difficile d'obtenir avec un réacteur tel qu'un élévateur (riser en anglais).

La présente invention vise à obtenir simultanément les meilleures conditions pour accéder aux trois facteurs précédemment cités : absence de rétro-mélange, homogénéité radiale et écoulement de type piston. Cet objectif a pu être atteint dans une zone réactionnelle parcourue par un co-courant de charge et de catalyseur dans le sens descendant, ce catalyseur étant porté à un niveau de fluidisation bien défini avant son contact avec la charge.

L'invention se rapporte donc à un nouveau procédé de conversion, en lit fluidisé, d'une charge consistant essentiellement en au moins un composé oxygéné, remédiant aux inconvénients mentionnés ci-avant, plus spécialement utilisable pour la transformation d'alcools tel que le méthanol. Suivant le mode préféré de l'invention, les charges que l'on utilise sont préchauffées, à une température au moins égale à la température de rosée de la charge et par exemple comprise entre 50 et 300 °C, avant leur traitement.

De manière générale, l'invention concerne un procédé de conversion catalytique en lit fluidisé d'une charge consistant essentiellement en, au moins un composé oxygéné tel que des alcools et/ou des éther-oxydes, comme le méthanol, le diméthyléther ou leurs mélanges, dans une zone de réaction, de préférence sensiblement verticale, dans laquelle la charge et le catalyseur circulent à co-courant de haut en bas, le procédé comportant une étape d'alimentation en catalyseur, au moins en partie régénéré, à l'extrémité supérieure de la zone de réaction, une étape d'introduction, et, dans le cas d'une charge au moins en partie liquide, de pulvérisation, de la charge dans une zone d'introduction située en dessous de la zone d'alimentation en catalyseur dans la partie supérieure de ladite zone de réaction, une étape de mise en contact dudit catalyseur et de ladite charge dans la partie supérieure de ladite zone de réaction, une étape de circulation du catalyseur et de la charge dans la zone de réaction au cours de laquelle on effectue la conversion de ladite charge dans des conditions de conversion appropriées et on désactive, au moins en partie, le catalyseur par dépôt de coke sur celui-ci, une étape de séparation et de strippage, du catalyseur désactivé de la charge convertie au moins en partie, dans une zone de séparation à l'extrémité inférieure de la zone de réaction, une étape de régénération d'au moins une partie du catalyseur, au moins en partie désactivé, dans au moins une zone de régénération et une étape de recyclage du catalyseur, au moins en partie régénéré, dans une zone de recyclage en amont de l'extrémité supérieure de la zone de réaction, caractérisé en ce que:
a) on prélève, lors de l'étape de recyclage, le catalyseur au moins en partie régénéré à partir d'une phase dense,
b) on effectue l'étape d'alimentation en catalyseur à l'extrémité supérieure de la zone de réaction en présence d'au moins un gaz de fluidisation et l'on obtient une suspension de catalyseur et de gaz,
c) on mesure la masse volumique de ladite suspension, par des moyens de mesure appropriés, en amont de la zone d'introduction de la charge,
d) on ajuste et régule par des moyens adéquats le débit du gaz de fluidisation en amont de la zone d'introduction de la charge dans des conditions telles que la masse volumique de la suspension gaz-solide ainsi créée soit comprise entre 50 et 500 kg/m³ avant sa mise en contact avec ladite charge.

Les conditions opératoires précitées sont donc très proches de celles préconisées dans les configurations avec élévateur (riser). On augmente de ce fait le coefficient d'échange thermique entre le catalyseur et la charge, et la répartition du catalyseur, selon un plan radial, est plus homogène. Il s'ensuit un contact plus rapide entre le catalyseur et la charge qui conduit à une meilleure sélectivité en oléfines légères, d'autant plus que les phénomènes de rétro-mélange sont minimisés. On a observé parallèlement un moindre dépôt de coke sur le catalyseur. Les conditions de fluidisation peuvent être telles que la vitesse de la suspension avant son contact avec la charge est d'environ 2 m/s à environ 8 m/s.

Selon une caractéristique particulièrement avantageuse, le catalyseur, avant son contact avec la charge, peut avoir une masse volumique apparente dans la suspension solide-gaz de 100 à 300 kg/m³, et une vitesse de 3 à 5 m/s.

C'est dans ces conditions que l'on a observé les meilleurs résultats, notamment en terme de coefficient d'échange thermique entre la charge et le catalyseur.

Il est possible par ailleurs, de régénérer le catalyseur, désactivé par le coke déposé lors de la réaction de conversion, dans deux zones de régénération. Ce catalyseur est tout d'abord envoyé dans une première zone de régénération où il est régénéré en partie, puis dans une deuxième zone de régénération, à une température plus élevée comprise en général entre 600 et 800 °C, de préférence entre 650 et 750 °C, et le catalyseur ainsi régénéré est recyclé, à une température de 650 °C par exemple, vers la zone réactionnelle de conversion.

Selon un premier mode de mise en oeuvre du procédé, la zone de recyclage du catalyseur est globalement ascendante et la vitesse d'ascension du catalyseur, grâce à des moyens de fluidisation appropriés, est en général de 5 à 20 m/s.

Selon une autre caractéristique avantageuse de l'invention, la zone de recyclage du catalyseur peut comprendre, en aval de la zone ascendante, une zone de stockage en lit fluidisé dense où l'on fait s'écouler le catalyseur régénéré. On le prélève dans le lit dense et on le fait circuler ensuite de la zone de stockage jusqu'à la partie supérieure de la zone réactionnelle, dans des conditions telles que sa masse volumique apparente dans la suspension est de 50 à 500 kg/m³ avant sa mise en contact avec la charge, la fluidisation du catalyseur étant assurée par au moins un moyen de fluidisation disposé sur un tube de sortie de la zone de stockage en amont de la zone réactionnelle. Dans ces conditions de fluidisation, la vitesse du catalyseur peut atteindre une valeur de 2 à 8 m/s.

Selon un deuxième mode de mise en oeuvre du procédé, la zone de recyclage peut être descendante, et le catalyseur est prélevé avantageusement du lit fluidisé dense du second régénérateur et s'écoule vers la zone réactionnelle, selon les conditions de vitesse et de masse volumique apparentes ci-dessus, grâce à un moyen de fluidisation disposé préférentiellement sur le tube de sortie conduisant à la zone réactionnelle de conversion.

La séparation du catalyseur et de l'effluent de conversion peut être réalisée, par exemple, de deux façons :
- selon une première variante, on peut séparer le catalyseur désactivé de la charge convertie par gravité dans la zone de séparation, puis on effectue une étape de cyclonage d'une partie au moins du catalyseur entraîné par l'effluent et on récupère un effluent de conversion ;
- selon une deuxième variante, on peut séparer dans la zone de séparation le catalyseur désactivé de la charge convertie en procédant, en sortie de la zone de réaction, à une étape de cyclonage de tout le catalyseur et de l'effluent, et on récupère un effluent de conversion.

Le dispositif notamment pour la mise en oeuvre du procédé peut être celui décrit dans la demande de brevet européen EP-A-479 645. Les moyens de régulation et de contrôle de la fluidisation du catalyseur en tête du réacteur sont par exemple ceux décrits dans le brevet français FR 2 655 053.

Dans le cadre de la présente invention, il n'est pas mentionné le type de catalyseurs employé, ni les divers fluides de fluidisation qui sont des données classiques bien connues de l'homme du métier.

On utilise de préférence des catalyseurs zéolithiques et de la vapeur d'eau, au moins un gaz inerte ou des hydrocarbures gazeux comme fluide de fluidisation aussi bien dans la colonne ascendante que dans la colonne descendante avant la zone réactionnelle.

Les conditions opératoires de la conversion de la charge comprenant au moins un composé oxygéné sont en général les suivantes :
- la charge, qui le plus souvent contient un alcool et habituellement le méthanol, renferme généralement de 50 à 100 %, de préférence de 70 à 90 % en poids de composés oxygénés et de 0 à 50 %, de préférence de 5 à 30 % en poids d'eau. Dans le cas le plus fréquent, où la charge contient du méthanol, elle peut être constituée par du méthanol brut tel que par exemple, du méthanol provenant d'une unité de synthèse de ce composé à partir d'un gaz contenant du monoxyde de carbone,
- la température d'injection est habituellement égale à la température de rosée de la charge,
- la pression absolue régnant dans l'unité de conversion est habituellement de 0,1 à 0,5 mégapascal (MPa), et le plus souvent d'environ 0,2 MPa,
- la température à l'intérieur de la zone de réaction est habituellement de 500 à 620°C, et le plus souvent de 550 à 590°C,
- le temps de séjour de la charge dans la zone de réaction est habituellement de 0,05 à 10 secondes, et le plus souvent de 0,5 à 3 secondes,
- la vitesse des gaz dans la zone de réaction est habituellement de 5 à 30 m/s, et le plus souvent de 10 à 20 m/s,
- la température de régénération est habituellement de 500 à 750 °C, et le plus souvent de 600 à 650°C.

Les conditions opératoires sont choisies pour que la composition des produits obtenus, exprimée par le rendement en carbone en composés éthyléniques ayant de 2 à 4 atomes de carbone dans leur molécule, soit supérieur à 70 %, et de préférence supérieur à 80 %. Les produits obtenus peuvent être particulièrement riches en éthylène (rendement en carbone pour l'éthylène supérieur à 40 %) ou particulièrement riche en propylène (rendement en carbone pour le propylène supérieur à 60 %).

L'invention sera mieux comprise au vu des figures illustrant de manière schématique et non limitative, le procédé et un dispositif de mise en oeuvre, parmi lesquelles:
- la figure 1 montre une unité de conversion catalytique en lit fluidisé avec deux zones de régénération et un réacteur de conversion descendant (dropper) alimenté en catalyseur à partir d'une enceinte de stockage en lit dense reliée à une colonne ascendante en provenance du lit dense du second régénérateur.
- la figure 2 illustre le cas où le réacteur est alimenté directement par voie descendante par le lit dense de second régénérateur.

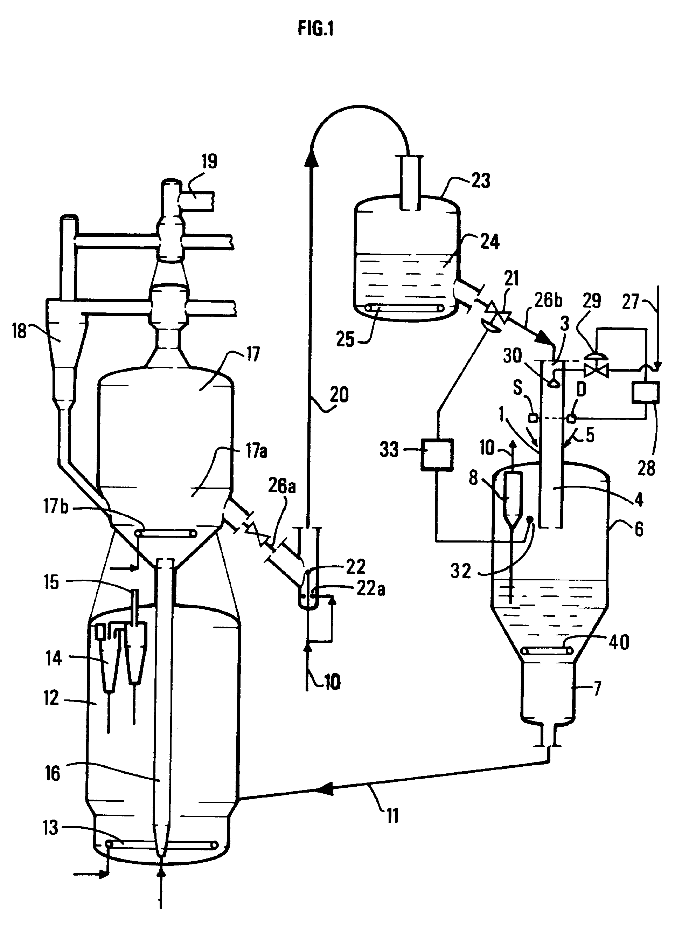

Selon la figure 1, le dispositif comporte un réacteur 1 tubulaire, de forme allongée (8 à 10 fois son diamètre de préférence) et sensiblement verticale, alimenté en sa partie supérieure 3 par du catalyseur zéolithe, au moins en partie régénéré, qui est amené par une ligne 26b. Le catalyseur est mis en contact avec une charge consistant essentiellement en au moins un composé oxygéné telle que par exemple une charge de méthanol brut pouvant contenir par exemple 5 % en poids d'eau, introduite à une distance d'un moyen de fluidisation du catalyseur correspondant à 3 fois le diamètre du réacteur, par des injecteurs 5 symétriquement répartis autour du réacteur. Ces injecteurs permettent d'introduire la charge sous forme gazeuse ou au moins partiellement liquide, dans ce dernier cas avec des tailles de gouttelettes de liquide très faibles qui permettent leur vaporisation instantanée. Le catalyseur et la charge s'écoulent donc à co-courant vers l'extrémité inférieure 4 du réacteur à une vitesse voisine de 10 m/s. La charge est alors convertie, dans des conditions appropriées et en un temps très court de 0,1 s environ, en hydrocarbures riches en éthylène et en propylène.

L'extrémité inférieure du réacteur débouche dans une enceinte de séparation 6, où sont séparés par gravité la majeure partie de catalyseur et un effluent de conversion de la charge. Le catalyseur désactivé s'accumule, sous la forme d'un lit fluidisé dense entretenu par des moyens appropriés 40, dans la partie inférieure 7 de l'enceinte où s'effectue à contre-courant en présence de vapeur d'eau, une séparation par strippage, des hydrocarbures restant sur le catalyseur. La distance entre le niveau du lit dense et l'extrémité inférieure du réacteur est en général comprise entre 3 et 10 fois le diamètre du réacteur et de préférence 5 à 7 fois. Un cyclone 8, ayant une jambe 9 plongeant dans le lit fluidisé dense de l'enceinte de séparation 6, termine la séparation de l'effluent du catalyseur entraîné, et cet effluent est récupéré à la sortie supérieure de l'enceinte 6 par une ligne 10.

De l'extrémité inférieure 7 du séparateur, le catalyseur désactivé par le coke déposé lors de la réaction de conversion est transféré par une ligne 11, et un gaz de transfert vers un premier régénérateur 12 où s'effectuent en lit fluide dense, dans des conditions de combustion appropriées et en présence d'un gaz contenant de l'oxygène amené par une ligne 13 une partie de la combustion du coke déposé sur le catalyseur. Celle-ci est réalisée à une température d'environ 450 à 650 °C, et est effectuée avec des concentrations en oxygène réduites choisies pour obtenir la combustion d'au moins 50 % de l'hydrogène contenu dans le coke déposé sur le catalyseur et brûler une partie du carbone (10 à 60 % en poids de carbone présent).

Un système de séparation cyclonique 14 est disposé dans la partie supérieure du premier régénérateur pour séparer les entraînements de catalyseur des gaz de combustion riches en CO, ceux-ci étant extraits par une ligne 15.

Le catalyseur partiellement régénéré, dont le coke contient peu d'hydrogène, est extrait du lit fluidisé dense du premier régénérateur par une colonne montante 16 et est conduit dans la partie inférieure 17a d'un second régénérateur 17 où est effectuée dans des conditions de seconde régénération appropriées, en lit fluidisé dense, la seconde régénération du catalyseur.

Celle-ci se déroule généralement à une température supérieure à 600 °C et inférieure à 800°C et sensiblement en l'absence de vapeur d'eau. La quantité d'oxygène introduite par un anneau de fluidisation 17b est suffisante pour maintenir une opération de régénération à haute température par combustion du coke, combinée à la combustion pratiquement complète du CO en CO₂. Ainsi, des teneurs pondérales aussi faibles que 0,05 % de coke ont été mesurées sur le catalyseur régénéré. Des séparateurs cycloniques 18 généralement situés à l'extérieur du second régénérateur, en raison des niveaux de température atteints, permettent de séparer les effluents de combustion du catalyseur régénéré qui sont récupérés par une ligne 19.

Selon un premier mode de réalisation de dispositif illustré par la figure 1, une conduite de déversement du catalyseur 26a ou tube de liaison en provenance du lit fluidisé dense du second régénérateur, et à une température d'environ 650°C, conduit le catalyseur à la base d'une colonne 20 ascendante verticale, de forme allongée.

La conduite de déversement aboutit entre un premier organe de fluidisation 21, qui est en général une couronne aérant le catalyseur, et un second organe 22, au dessus de ladite couronne, qui communique au catalyseur circulant dans la colonne une énergie correspondant en général à une vitesse de 5 à 20 m/s et de préférence 3 à 10 m/s. La masse volumique apparente dans la colonne est d'environ 100 kg/m³. Le premier organe de fluidisation est situé à la base de la colonne ascendante tandis que le second est, par exemple, situé à une distance par rapport à la cote d'arrivée de la conduite de déversement dans la colonne ascendante de 1 à 5 fois le diamètre de ladite colonne. Tous deux sont alimentés par au moins un gaz, tel que de la vapeur d'eau, un gaz inerte ou des hydrocarbures gazeux.
Le second organe de fluidisation est habituellement constitué d'au moins deux lignes d'arrivée de gaz sensiblement symétriques et dirigées vers le haut de façon à disposer d'un co-courant de catalyseur et de gaz. Ces deux lignes déterminent par exemple un angle de 50° par rapport à la verticale.

La longueur de la colonne ascendante est en général de 3 à 90 fois son diamètre et avantageusement de 10 à 25 fois son diamètre. Dans sa partie supérieure, la colonne débouche dans une enceinte de stockage 23. Cette enceinte de stockage est constituée d'un lit fluidisé 24 dense mis en mouvement, par une couronne de fluidisation 25, par un gaz tel que celui décrit précédemment.

Du lit fluidisé dense, part un tube 26b de sortie qui relie l'enceinte de stockage 23 à la partie supérieure 3 du réacteur de conversion 1. Au moins, un moyen de fluidisation 30, alimenté par au moins un gaz de fluidisation 27 décrit ci-dessus et relié à une vanne 29 de débit de fluide, fait s'écouler le catalyseur à une concentration ou masse volumique apparente dans la suspension gaz-solide de 100 à 300 kg/m³ et selon une vitesse de 3 m/s environ, avant son contact avec la charge introduite par les injecteurs. Ceux-ci sont avantageusement disposés en un point situé à une distance de l'extrémité supérieure du réacteur (début de la partie verticale) correspondant à environ 6 fois le diamètre du réacteur.

La mesure de la masse volumique est effectuée selon une direction sensiblement perpendiculaire à l'axe du réacteur 1. La source de rayonnement ionisant S est positionnée en amont des injecteurs 5 de la charge, à l'extérieur du réacteur et le rayonnement ayant traversé le réacteur contenant le solide en mouvement est récupéré par un détecteur D.

Le signal est envoyé dans un organe 28 de traitement programmable qui contrôle et régule la vanne 29 de débit de fluide de fluidisation par référence à un point de consigne préalablement affiché.

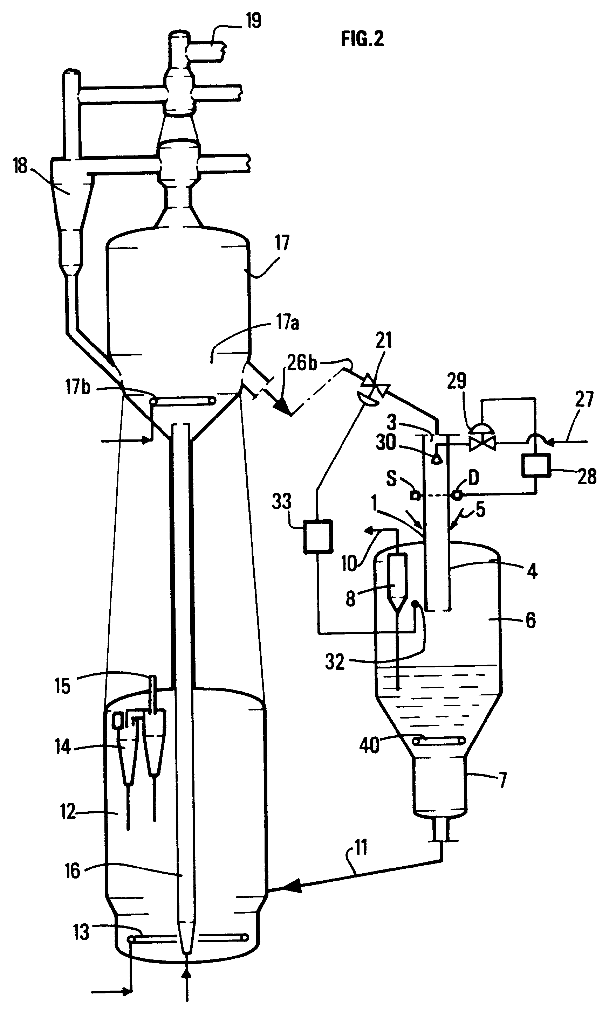

Selon un autre mode de réalisation illustré par la figure 2, le prélèvement du catalyseur régénéré est effectué directement dans le lit fluidisé dense, non pas de l'enceinte de stockage 24, mais du second régénérateur 17, grâce à la conduite 26b qui fait descendre le catalyseur directement dans l'extrémité supérieure 3 du réacteur 1.

Le catalyseur est fluidisé dans les conditions de masse volumique selon l'invention grâce au moyen de fluidisation 30, soit pommeau d'arrosoir d'injection, soit piquages directement le long de la conduite, relié à la vanne 29 d'ouverture ou de fermeture de débit du fluide de fluidisation amené par la ligne 27. Cette vanne est reliée, comme décrit ci-dessus, à un microordinateur 28 fonctionnant comme dans le cas de la figure 1, et qui reçoit un signal délivré par le détecteur D, ce dernier recevant un rayonnement ionisant émis par la source S. La source S et le détecteur D, comme dans le cas de la figure 1, sont situés sensiblement de part et d'autre à l'extérieur du réacteur 1, et en amont des injecteurs de la charge et de préférence selon une corde, selon laquelle la valeur mesurée de la masse volumique du catalyseur en mouvement est pratiquement égale à la valeur moyenne de cette masse volumique, calculée sur tout le plan de la section.

Dans le cadre de la présente invention, il n'est pas fait mention de tous les paramètres de fonctionnement de l'unité qui sont des données classiques connues de l'homme du métier. Il est par exemple constant que la température des effluents de conversion, mesurée en sortie du réacteur de conversion grâce à une sonde 32, est directement en relation avec le débit de catalyseur régénéré s'écoulant du lit fluidisé dense du second régénérateur, et qui est assuré par une vanne 21, elle-même asservie par des moyens de contrôle 33 du débit connectés à la sonde 32.

Par ailleurs, on a décrit une étape de séparation par gravité du catalyseur et de l'effluent, complétée par une étape secondaire de séparation par cyclonage d'une partie seulement du catalyseur qui n'a pas été séparé de l'effluent. Bien évidemment, on peut aussi effectuer l'étape de séparation en envoyant tout le catalyseur désactivé dans au moins un cyclone de grande taille dont l'entrée est connectée à l'extrémité inférieure du réacteur, et dont la jambe de sortie plonge dans la phase dense des moyens de séparation par strippage, ledit cyclone ayant une autre sortie pour l'effluent à récupérer.

## Revendications

1. Procédé de conversion catalytique en lit fluidisé d'une charge consistant essentiellement en au moins un composé oxygéné, dans une zone de réaction dans laquelle la charge et le catalyseur circulent à co-courant de haut en bas, le procédé comportant une étape d'alimentation en catalyseur, au moins en partie régénéré, à l'extrémité supérieure de la zone de réaction, une étape d'introduction, et, dans le cas d'une charge au moins en partie liquide, de pulvérisation, de la charge dans une zone d'introduction, située en dessous de la zone d'alimentation en catalyseur dans la partie supérieure de ladite zone de réaction, une étape de mise en contact dudit catalyseur et de ladite charge dans la partie supérieure de ladite zone de réaction, une étape de circulation du catalyseur et de la charge dans la zone de réaction au cours de laquelle on effectue la conversion de ladite charge dans des conditions de conversion appropriées, et on désactive au moins en partie le catalyseur par dépôt de coke sur celui-ci, une étape de séparation et de strippage du catalyseur désactivé de la charge convertie au moins en partie dans une zone de séparation à l'extrémité inférieure de la zone de réaction, une étape de régénération d'au moins une partie du catalyseur au moins en partie désactivé dans au moins une zone de régénération et une étape de recyclage du catalyseur au moins en partie régénéré dans une zone de recyclage en amont de l'extrémité supérieure de la zone de réaction, caractérisé en ce que:
a) on préléve, lors de l'étape de recyclage, le catalyseur au moins en partie régénéré à partir d'une phase dense,
b) on effectue l'étape d'alimentation en catalyseur à l'extrémité supérieure de la zone de réaction en présence d'au moins un gaz de fluidisation et l'on obtient une suspension de catalyseur et de gaz,
c) on mesure la masse volumique de ladite suspension, par des moyens de mesure appropriés, en amont de la zone d'introduction de la charge,
d) on ajuste et régule, par des moyens adéquats, le débit du gaz de fluidisation en amont de la zone d'introduction de la charge, dans des conditions telles que la masse volumique de la suspension gaz-solide ainsi créée soit comprise entre 50 et 500 kg/m³ avant sa mise en contact avec ladite charge.

2. Procédé selon la revendication 1 dans lequel la vitesse du catalyseur est comprise entre 2 et 8 m/s.

3. Procédé selon la revendication 1 ou 2, dans lequel le catalyseur régénéré est accéléré à une vitesse comprise entre 3 et 5 m/s, et la masse volumique apparente de la suspension est comprise entre 100 à 300 kg/m³.

4. Procédé selon l'une des revendications 1 à 3, dans lequel le catalyseur est régénéré dans deux zones de régénération dans des conditions appropriées, le catalyseur désactivé étant envoyé dans une première zone de régénération puis dans une seconde zone de régénération, le catalyseur régénéré étant recyclé de la deuxième zone de régénération vers la zone de réaction

5. Procédé selon l'une des revendications 1 à 4 dans lequel la zone de recyclage est ascendante et où la vitesse d'ascension du catalyseur est de 5 à 20 m/s.

6. Procédé selon la revendication 5 dans lequel la zone de recyclage comprend, en aval de la zone ascendante, une zone de stockage en lit fluidisé dense où l'on fait s'écouler le catalyseur régénéré et on l'envoie de la zone de stockage dans la partie supérieure de la zone réactionnelle avec la masse volumique apparente de 50 à 500 kg/m³.

7. Procédé selon l'une des revendications 1 à 4 dans lequel la zone de recyclage est descendante.

8. Procédé selon l'une des revendications 1 à 7 dans lequel on sépare le catalyseur désactivé de la charge convertie par gravité dans la zone de séparation puis on effectue une étape de cyclonage d'une partie au moins du catalyseur entraîné et on récupère un effluent de conversion.

9. Procédé selon l'une des revendications 1 à 7 dans lequel on sépare dans la zone de séparation le catalyseur désactivé de la charge convertie en procédant à une étape de cyclonage de tout le catalyseur et on récupère un effluent de conversion.

10. Procédé selon l'une des revendications 1 à 9 dans lequel la charge comprend au moins un alcool, de préférence le méthanol.

11. Procédé selon l'une des revendications 1 à 10 dans lequel la charge contient de l'eau.

## Claims

1. A method of catalytically converting a charge consisting essentially of at least one oxygenated compound in a fluidised bed, in a reaction zone in which the charge and catalyst circulate co-currently in a downward direction, comprising a stage of feeding at least partly regenerated catalyst into the upper end of the reaction zone, a stage of introducing the charge - and in the case of an at least partly liquid charge spraying it - into an introduction zone, located below the catalyst feed zone in the upper part of said reaction zone, a stage of putting the catalyst and charge into contact in the upper part of the reaction zone, a stage of circulating the catalyst and charge in the reaction zone, during which the charge is converted under appropriate conversion conditions and the catalyst is at least partly deactivated by depositing coke on it, a stage of separating and stripping the deactivated catalyst from the at least partly converted charge in a separation zone at the lower end of the reaction zone, a stage of regenerating at least part of the at least partly deactivated catalyst in at least one regenerating zone, and a stage of recycling the at least partly regenerated catalyst to a recycling zone upstream of the upper end of the reaction zone, characterised in that:
a) the at least partly regenerated catalyst is taken from a dense phase at the recycling stage,
b) the catalyst feeding stage is carried out at the upper end of the reaction zone, in the presence of at least one fluidising gas, and a suspension of catalyst and gas is obtained,
c) the density of said suspension is measured by appropriate measuring means, upstream of the zone where the charge is introduced,
d) the throughput of fluidising gas is adjusted and regulated upstream of the zone where the charge is introduced, under conditions such that the density of the resultant gas-solid suspension is from 50 to 500 kg/m³ before it is put into contact with said charge.

2. The method of claim 1, wherein the speed of the catalyst is from about 2 to about 8 m/s.

3. The method of claim 1 or 2, wherein the regenerated catalyst is accelerated to a speed of 3 to 5 m/s, and the apparent density of the suspension is from 100 to 300 kg/m³.

4. The method of any of claims 1 to 3, wherein the catalyst is regenerated in two regenerating zones under appropriate conditions, wherein the deactivated catalyst is passed into a first regenerating zone then into a second regenerating zone, and whcrcin the catalyst is recycled from the second regenerating zone to the reaction zone.

5. The method of any of claims 1 to 4, wherein the recycling zone has a totally upward flow and where the speed at which the catalyst rises is 5 to 20 m/s.

6. The method of claim 5, wherein the recycling zone has a zone for storage in a dense fluidised bed, downstream of the zone with an upward flow, the regenerated eatalyst flowing into the storage zone and being passed out of it into the upper part of the reaction zone with an apparent density of 50 to 500 kg/m³.

7. The method of any of claims 1 to 4, wherein the recycling zone has a downward flow.

8. The method of any of claims 1 to 7, wherein the deactivated catalyst is separated from the converted charge by gravity in the separating zone, then a stage of cycloning at least part of the entrained catalyst is carried out, and a conversion effluent is recovered.

9. The method of any of claims 1 to 7, wherein the deactivated catalyst is separated from the converted charge in the separating zone, by proceeding to a stage of cycloning all the catalyst, and a conversion effluent is recovered.

10. The method of any of claims 1 to 9, wherein the charge comprises at least one alcohol, preferably methanol.

11. The method of any of claims 1 to 10, wherein the charge contains water.

## Patentansprüche

1. Verfahren zur katalytischen Umwandlung im Fließbett einer im wesentlichen aus wenigstens einer sauerstoffhaltigen Verbindung bestehenden Charge, in einer Reaktionszone, in der die Charge und der Katalysator von oben nach unten im Gleichstrom zirkulieren, wobei das Verfahren eine Stufe zum Speisen mit wenigstens zum Teil regeneriertem Katalysator am oberen Ende der Reaktionszone, eine Einführungsstufe und im Falle einer wenigstens zum Teil flüssigen Charge eine Zerstäubungsstufe der Charge in einer Einführungszone hat, die unterhalb der Katalysatorspeisestufe im oberen Teil dieser Reaktionszone angeordnet ist, eine Stufe zur Kontaktierung dieses Katalysators und dieser Charge im oberen Teil dieser Reaktionszone, eine Stufe, um Katalysator und Charge in einer Reaktionszone zirkulieren zu lassen, während der man die Umwandlung dieser Charge unter geeigneten Umwandlungsbedingungen durchführt und man wenigstens zum Teil den Katalysator durch Abscheiden von Koks auf diesen deaktiviert, eine Stufe zum Trennen und Strippen des deaktivierten Katalysators von der umgesetzten Charge, wenigstens zum Teil in einer Trennzone am unteren Ende der Reaktionszone, eine Regenerierungszone wenigstens eines Teils des wenigstens zum Teil deaktivierten Katalysators in wenigstens einer Regenerierungsstufe und eine Stufe zum Rezyklisieren des wenigstens zum Teil regenerierten Katalysators in einer Rezyklisierungszone vor dem oberen Ende der Reaktionszone umfasst, dadurch gekennzeichnet, daß:
a) man während der Rezyklisierungsstufe den wenigstens zum Teil regenerierten Katalysator ausgehend von einer dichten Phase entnimmt,
b) man die Stufe zur Speisung mit Katalysator am oberen Ende der Reaktionszone in Anwesenheit wenigstens eines Fluidisierungsgases durchführt und man eine Suspension aus Katalysator und Gas erhält,
c) die volumenbezogene Masse bzw. Dichte dieser Suspension durch geeignete Meßmittel vor der Zone zum Einführen der Charge misst, und
d) man über adäquate Mittel den Durchsatz des Fluidisierungsgases vor der Zone zum Einführen der Charge unter Bedingungen derart einstellt und reguliert, daß die volumenbezogene Masse der so erzeugten Gas-Feststoff-Suspension zwischen 50 und 500 kg/m³ vor ihrer Kontaktierung mit dieser Charge beträgt.

2. Verfahren nach Anspruch 1, bei dem die Geschwindigkeit des Katalysators zwischen 2 und 8 m/sec beträgt.

3. Verfahren nach dem Anspruch 1 oder 2, bei dem der regenerierte Katalysator auf eine Geschwindigkeit zwischen 3 und 5 m/sec beschleunigt wird und die scheinbare volumenbezogene Masse der Suspension zwischen 100 und 300 kg/m³ beträgt.

4. Verfahren nach einem der Ansprüche 1 bis 3, bei dem der Katalysator in zwei Regenerierungszonen unter geeigneten Bedingungen regeneriert wird, wobei der deaktivierte Katalysator in eine erste Regenerierungszone, dann eine zweite Regenerierungszone geschickt wird, wodurch der regenerierte Katalysator aus der zweiten Regenerierungszone zur Reaktionszone rezyklisiert wird.

5. Verfahren nach einem der Ansprüche 1 bis 4, bei dem die Rezyklisierungszone aufsteigend und die Aufsteigegeschwindigkeit des Katalysators 5 bis 20 m/sec ist.

6. Verfahren nach Anspruch 5, bei dem die Rezyklisierungszone hinter der aufsteigenden Zone eine Zone zur Speicherung im dichten fluidisierten Bett umfasst, wo man den regenerierten Katalysator fliessen lässt und man ihn aus der Speicherzone in den oberen Teil der Reaktionszone mit der scheinbaren volumenbezogenen Masse von 50 bis 500 kg/m³ gibt.

7. Verfahren nach einem der Ansprüche 1 bis 4, bei dem die Rezyklisierungszone absteigend ist.

8. Verfahren nach einem der Ansprüche 1 bis 7, bei dem man den deaktivierten Katalysator von der umgesetzten Charge durch Schwerkraft in der Trennzone trennt, dann eine Zyklonierungsstufe wenigstens eines Teils des mitgerissenen Katalysators durchführt und man einen Umwandlungsabstrom gewinnt.

9. Verfahren nach einem der Ansprüche 1 bis 7, bei dem man in der Trennzone den deaktivierten Katalysator von der umgesetzen Charge trennt, indem man eine Zyklonierungsstufe des gesamten Katalysators vornimmt und man einen Umwandlungsabstrom gewinnt.

10. Verfahren nach einem der Ansprüche 1 bis 9, bei dem die Charge wenigstens einen Alkohol, vorzugsweise Methanol, umfasst.

11. Verfahren nach einem der Ansprüche 1 bis 10, bei dem die Charge Wasser enthält.
